# EUROPEAN PATENT APPLICATION

(11) **EP 4 841 102 A1**
(43) Date of publication of application: **18.11.2026**
(21) Application number: 25382494.0
(22) Date of filing: 16.05.2025
(51) Int. Cl.: F03D 13/10, F03D 13/20, F03D 15/00

(54) **METHOD FOR INSTALLING A WIND TURBINE DRIVE TRAIN AND WIND TURBINE DRIVE TRAIN**

(71) Applicant: Siemens Gamesa Renewable Energy Eolica S.L., 31192 Sarriguren (Navarra) (ES)
(72) Inventor: Rogg, Andreas, 25469 Halstenbek (DE)
(74) Representative: SGRE-Association

(57) **Abstract**

The invention describes a method for installing a wind turbine drive train (7) for transmitting torque from a wind rotor (4) to a generator (9), said wind turbine drive train (7) comprising a support frame (16), a bearing unit (20), first fixing means (30) and second fixing means (32). The method comprising the steps of connecting the bearing unit (20) to the support frame (16) with the first fixing means (30) to the support frame (16), adjusting the position of the bearing unit (20) relative to the support frame (16), and fixing the bearing unit (20) rigidly to the support frame (16) with the second fixing means.

## Description

### Background

In an established type of wind turbine drive train, the low-speed shaft or rotor shaft is driven by the aerodynamic rotor and connected to the drive end of a gearbox. A main bearing unit supports the low-speed shaft by a pair of bearings, one of which is installed at the front or rotor side end of the shaft, and the other is installed at the rear or generator side end of the shaft. The rotor bearings can be secured by means of a joint bearing housing.

The present invention relates to a method for installing a wind turbine drive train for transmitting torque from a rotor to a generator. The present invention further relates to a wind turbine drivetrain. The present invention further relates to a wind turbine nacelle comprising said wind turbine drive train.

Wind turbines are increasingly used for the generation of electrical energy. A wind turbine typically comprises a tower and a nacelle mounted on the tower, to which a rotor is attached. The rotor is coupled to a generator via the so-called drive train. The rotor comprises a plurality of rotor blades extending from the central rotor hub. The blades are oriented in such a way that wind passing over the blades turns the rotor and rotates the rotor shaft, thereby driving the generator to generate electricity.

Wind turbines are in continuous development due to advancements in technology and energy harvesting. Hence, next-generation wind turbines have grown larger compared to older ones. In the majority of modern large wind turbines, a gearbox is arranged between the wind rotor and the generator to reduce the large torque on the rotor side by increasing the speed on the generator side. The wind turbine drive train is one of the components which has greatly increased in size as the increased rotor torque and rotor power must be transmitted by the drive train. The increased size of the wind turbine components creates greater challenges concerning the logistics, like transportation, lifting on the tower top and installation inside the nacelle.

It is therefore an object of the invention to provide an improved design of a wind turbine drive train avoiding the disadvantages of the state of the art. It is in particular an object of the invention to simplify the installation of a wind turbine drive train and to improve the lifetime of a wind turbine drive train.

This object is achieved by the claimed method of installing a wind turbine drive train, by the claimed drive train and by the claimed wind turbine.

### Description

According to the invention, a method for installing a wind turbine drive train for transmitting torque from a wind rotor to a generator is provided, said wind turbine drive train comprising a support frame, a bearing unit, first fixing means and second fixing means. The method comprises the steps of connecting the bearing unit to the support frame in an initial position by attaching the bearing unit with the first fixing means to the support frame, adjusting the position of the bearing unit relative to the support frame by adjusting the position of the first fixing means, and fixing the bearing unit rigidly to the support frame with the second fixing means. Providing first and second fixing means advantageously allows for a stepwise approach in connecting the bearing unit to the support frame. In a first step, the bearing unit is connected to the support frame in an initial position. This initial position is not the operational position, which will allow the wind turbine drive train to be operated in power production mode. This connecting in an initial position allows to allocate the bearing unit relative to the support frame in a save way without a risk of damaging any connection interface on one of the components. As the handling of drive train components with a weight of several tens of tons is a delicate procedure, especially when done on the construction site of the wind turbine, it might happen that such a large component is not handled carefully enough to avoid a little impact on the connection interfaces, e.g. flanges of the bearing unit and the support frame. Such a little impact might be sufficient to damage the connection surface of the connection interface, introducing the risk that the connection only fits together with a little air gap in the contact zone. By providing first fixing means connecting the bearing unit and the support frame in an initial position, uncontrolled relative movements between the two components are avoided. In a second step the position of the bearing unit relative to the support frame is adjusted in a controlled manner by adjusting the position of the first fixing means. Depending on the design constraints, it can be useful to adjust the position of the first fixing means relative to the bearing unit, relative to the support frame, or both. During this adjustment step, the relative position of the bearing unit to the support frame is adjusted until the connection interfaces fit perfectly together. During this adjustment step, the relative movements between the bearing unit and the support frame can be controlled precisely, as there is already a connection established between the bearing unit and the support frame by the first fixing means. After the connection interfaces of the bearing unit and the support frame fit perfectly together, the bearing unit and the support frame are rigidly fixed together using the second fixing means. With this step, the final operation position of the bearing unit relative to the support frame is reached.

In other words, the first fixing means allows for connecting the bearing unit and the support frame in a safe initial position close to each other without a risk of damaging the connection interfaces, and the adjusting step allows for a fine tuning of the relative position, which means that the components are brought together until the connection interfaces are in contact in the operation position in a precisely controlled adjustment step. In the next step the bearing unit and the support frame are firmly connected to each other using the second fixing means. After the second fixing means are attached, the bearing unit and the support frame are firmly and rigidly fixed to each other in the operational position. Rigidly fixed means that relative movements of the bearing unit relative to the support frame are only possible due to elastic deformations of the components or connection interfaces.

On the first glance, the connection process becomes a bit more complicated with the inventive method, as two additional steps must be performed. The inventor has recognized that the invention allows advantageously to mount the bearing unit under unfavorable conditions like strong winds and swinging cranes or towers. Risks for the service personal are advantageously reduced and damages in the connection interfaces are safely avoided, thus leading to a longer lifetime of the wind turbine. In addition, the amount of maintenance work which is often required to repair little damages like scratches in the coating of components due to the installation, which may lead to corrosion in a later stage, is advantageously reduced.

Another aspect of the invention relates to a wind turbine drive train for transmitting torque from a wind rotor to a generator comprising a support frame, a bearing unit, first fixing means, second fixing means and an actuator. The first fixing means is adapted to fix the bearing unit to the support frame in an initial position. The actuator is adapted to adjust the position of the first fixing means to adapt the position of the bearing unit relative to the support frame. The second fixing means are adapted to fix the bearing unit rigidly to the support frame. The inventive drive train offers the same advantages as explained for the method above.

The actuator advantageously allows for a precise adjustment of the bearing unit relative to the support frame. The actuator might be any kind of hydraulic, electric or pneumatic device allowing for precise adjustment movements. It might also be a spindle or screw device. In a preferred embodiment, the actuator is acting between the bearing unit and the first fixing means, the support frame and the first fixing means or the bearing unit and the support frame.

Another aspect of the invention relates to a wind turbine nacelle comprising a wind turbine drive train according to the invention and preferably a yaw system, which is adapted for connecting the support frame to a tower. The yaw systems advantageously allows to orientate the wind turbine nacelle in the best suited position for installing the wind turbine drive train.

In one embodiment, the bearing unit comprises a bearing housing and a rotor bearing for supporting a wind rotor. In another embodiment, the bearing unit comprises an axle pin and a rotor bearing for supporting a wind rotor. In a preferred embodiment, the bearing unit comprises two rotor bearings mounted in an axial distance in a bearing housing or on an axle pin for supporting the wind rotor. Axial distance means a distance in direction of the rotor axis. In some embodiments, the bearing unit comprises a rotor shaft which is supported by the rotor bearings. Using two rotor bearings mounted in an axial distance advantageously allows for a long lifetime of the bearings due to reduced specific bearing loads.

In one embodiment, the support frame connects the bearing unit to the lower structure of a wind turbine nacelle. In a preferred embodiment, the lower structure of the wind turbine nacelle comprises a yaw system, which connects the nacelle rotatably around a vertical axis to the tower. In a preferred embodiment, the vertical axis is the longitudinal axis of the tower. In a preferred embodiment, the rotor axis and the vertical axis are mainly perpendicular to each other. In a preferred embodiment, the wording "mainly perpendicular" defines an angle between 75 and 89 degrees, in an even more preferred embodiment, the angle is defined between 81 and 88 degrees.

In one embodiment, fixing means is any kind of attachment means adapted to limit the relative movement of two components relative to each other. Fixing means includes beams, bars, bolts, pins, rails, axles, etc.

In one embodiment, first fixing means includes at least two tensioned cables or chains or tension members, which are preferably tensioned against each other. In one embodiment, first fixing means are impeding movements of two components relative to each other in at least 3 degrees of freedom. In a preferred embodiment, first fixing means are impeding movements in at least 4 degrees of freedom. In a most preferred embodiment, first fixing means are impeding movements in at least five degrees of freedom. In another preferred embodiment, the first fixing means are at least impeding movements in an orthogonal direction to a connection surface. The first fixing means advantageously impede any movement which may lead to a damage of one of the components, it means the bearing unit and the support frame. The risk of any unwanted movements is of course advantageously reduced the more degree of freedoms are blocked.

In a particularly preferred embodiment, all six degrees of freedom are blocked by the first fixing means and relative movements of the bearing unit relative to the support frame are only possible by actuating an actuator.

Particularly advantageous embodiments and features of the invention are given by the dependent claims, as revealed in the following description. Features of different claim categories may be combined as appropriate to give further embodiments not described herein.

In a preferred embodiment of the invention, the step of fixing the bearing unit rigidly to the support frame comprises at least one of the steps of fixing the bearing unit rigidly to the support frame at a rotor side flange of the bearing unit or fixing the bearing unit rigidly to the support frame at a generator side flange of the bearing unit. One preferred embodiment of the invention comprises the steps of fixing the bearing unit rigidly to the support frame at a rotor side flange of the bearing unit and at a generator side flange of the bearing unit. Using a rotor side flange and/or a generator side flange on the bearing unit as connection interface advantageously allows for a simple, reliable and well proven design for fixing the bearing unit to the support frame. Flanges are advantageous devices which can easily be checked during maintenance for their functionality and are easy to demount if necessary, during the lifetime of the wind turbine drive train.

In another preferred embodiment of the invention, the method comprises at least one of the additional steps of providing friction enhancing means between the rotor side flange, in particular a vertical connection surface of the rotor side flange of the bearing unit and the support frame, before fixing the bearing unit rigidly to the support frame, or providing friction enhancing means between the generator side flange, in particular a vertical connection surface of the generator side flange of the bearing unit and the support frame, before fixing the bearing unit rigidly to the support frame. Providing friction enhancing means at the connection interfaces, especially between the rotor side and/or generator side flange and the support frame, advantageously allows for reduced size and reduced clamping force between the flanges of the bearing unit and the support frame. The clamping force is preferably provided by pretensioned bolts. Providing friction enhancing means advantageously reduces the costs and the size of the wind turbine drive train, the reduced size allowing for easier transportation and installation. Additionally, the service effort is reduced due to smaller bolts in the flanges, allowing for smaller service tools, thus reducing the required installation and service effort. At the same time, friction enhancing means provides advantageously a guaranteed minimum friction coefficient, thus providing a safe and rigid connection between the bearing unit and the support frame. In one embodiment, the friction enhancing means comprise a coating on the connection surface, what advantageously allows for a simple and cost effective method to increase the friction. In other embodiments, an intermediate part like a friction increasing foil or a thin plate is placed between the bearing unit and the support frame. This advantageously allows for even higher friction coefficients but usually comes at higher costs. Preferably, the friction enhancing means is providing before connecting the bearing unit to the support frame in the initial position. In a preferred embodiment, the friction enhancing means is already provided in the workshop when the bearing unit or the support frame are produced, as any work step outside a workshop generally needs more effort than in a workshop.

In a preferred embodiment, the rotor side flange and/or the generator side flange comprises a vertical connection surface. A vertical connection surface means that the connection surface of the flange is mainly perpendicular to the rotor axis. A vertical connection surface advantageously allows for a better load path from the bearing unit to the support frame. Compared to widely used flanges with horizontal connection surface for bearing units, less material is needed to provide a stiff and safe connection with a vertical connection surface. So, a rotor side flange and/or a generator side flange with a vertical connection surface advantageously reduces the weight of the wind turbine drivetrain.

In another preferred embodiment of the invention, the method further comprises the step of providing friction decreasing means between the bearing unit and the support frame before adjusting the position of the first fixing means. Providing friction decreasing means between the bearing unit and the support frame, advantageously allows for smooth and precise adjustment of the bearing unit relative to the support frame. First of all, friction decreasing means reduces the effort needed to move the heavy bearing unit relative to the support frame, thus advantageously reducing the required forces or the size of an actuator. Additionally, and even more important, high friction during the relative movement between the bearing unit and the support frame leads to stick slip effects, what means that when the bearing unit starts to move it tends to move with a jerk. Thus, a precise adjustment is impeded by the friction in a usual connection. This effect can be advantageously prevented by using friction decreasing means. Advantageously, the friction decreasing means are provided before connecting the bearing unit to the support frame in an initial position, preferably the friction decreasing means are already provided in the workshop when producing the bearing unit or the support frame as any installation step outside a workshop generally needs more effort than in a workshop.

In another preferred embodiment of the invention, the method comprises the additional step of demounting the friction decreasing means after adjusting the position of the first fixing means. Demounting the friction enhancing means allows for two advantages. Firstly, the friction decreasing means are only a tool and not part of the drive train if they are demounted after the installation procedure, thus saving costs for the drive train. Secondly, demounting the friction decreasing means allows for a clearly defined load path from the bearing unit to the support frame via the connection interfaces, e.g. the rotor side and generator side flange. A second load path going through the friction decreasing means is detrimental for the structural design of the bearing unit and the support frame as additional parts of the drive train need to support significant loading being introduced by the rotor via the bearing unit. This is advantageously prevented by demounting the friction decreasing means. Preferably, the friction decreasing means are demounted after the bearing unit has been rigidly fixed to the support frame using the second fixation means.

In another preferred embodiment of the invention, the method comprises the additional step of providing guiding means before connecting the bearing unit to the support frame in the initial position. Providing guiding means advantageously reduces the risk of uncontrolled movements between the bearing unit and the support frame when installing the bearing unit. The guiding means might be any kind of guiding pin or guiding bolt, a guiding rail or a guiding surface. The aim of the guiding means is to prevent a relative movement of the bearing unit relative to the support frame in at least one degree of freedom. In a preferred embodiment, the guiding means prevents the relative movement in at least two degrees of freedom, thus advantageously allowing for a much easier installation of the bearing unit on the support frame.

In another preferred embodiment of the invention, the method comprises the additional step of providing an actuator before adjusting the position of the first fixing means. Providing an actuator advantageously allows for a precise adjustment of the bearing unit relative to the support frame. The actuator might be any kind of hydraulic, electric or pneumatic device allowing for precise adjustment movements. It might also be a spindle or screw device, which, in one embodiment, is manually actuated. In a preferred embodiment, the actuator is acting between the bearing unit and the first fixing means, the support frame and the first fixing means, or the bearing unit and the support frame. The actuator allows to provide with little human effort the forces needed to adjust the position of the bearing unit relative to the support frame. Advantageously, the actuator is already installed before connecting the bearing unit to the support frame in the initial position, as the installation of the actuator is easier when the bearing unit and the support frame are not connected to each other.

In another preferred embodiment of the invention, the step of adjusting the position of the bearing unit relative to the support frame comprises using an elastic gearbox support for adjusting the position of the bearing unit relative to the support frame. Using an elastic gearbox support for adjusting the position of the bearing unit relative to the support frame allows for a defined spring force against which the position of bearing unit relative to the support frame is adjusted. There are different possibilities known in the state of the art to design the gearbox support. In one embodiment, the gearbox support is realized in the form of torque arms connected to the gearbox housing. In many embodiments, two torque arms on both sides of the gearbox are connected to the support frame or to a main frame. The connection is realized via elastic elements to reduce noise emission and to allow for some flexibility to compensate for manufacturing tolerances and alignment problems. In such an embodiment of a wind turbine drive train comprising an elastic gearbox support, advantageously no additional part needs be introduced to allow for the defined relative movement between the bearing unit and the support frame. Using the elastic gearbox support for adjusting the position of the bearing unit relative to the support frame may require that the bearing unit together with the rotor shaft and the gearbox is installed as one unit on the support frame. This advantageously allows for a simple installation of the drive train as no other difficult installation steps on the low speed side of the drive train needs to be performed.

In a preferred embodiment of the invention, the method comprises at least seven, preferably at least eight of the following steps:
- Lifting the bearing unit with a predetermined tilt angle, using lifting means, preferably with a crane.
- Using a guiding means, preferably attached on the generator side of the bearing unit, to lower the bearing unit.
- Setting down the bearing unit on the support frame in an initial position, preferably on a first friction decreasing means on the rotor side of the bearing unit and a second friction decreasing means at the generator side.
- Connecting the bearing unit in the initial position with first fixing means to the support frame. The connection is preferably established via the rotor shaft, the gearbox and the elastic gearbox support.
- Releasing the lifting means.
- Adjusting the position of the bearing unit relative to the support frame by using an actuator which moves the bearing unit axially backwards relative to the first fixing means.
- Adjusting the position of the bearing unit relative to the support frame by using an actuator which moves the bearing unit downwards relative to the first fixing means.
- Fixing the bearing unit rigidly to the support frame by second fixing means on the rotor side flange and the generator side flange of the bearing unit.
- Releasing the first fixing means.
- Removing the friction decreasing means on rotor side and generator side.
- Remounting the first fixing means for fixing the gearbox support.

This method gives a safe and effective procedure to install a wind turbine drive train.

In a preferred embodiment, the elastic gearbox support comprises a hydraulic elastomer. Hydraulic elastomers are known in the state of the art as they allow during the operation of the wind turbine drive train to adjust the stiffness of the elastic gearbox support to the operating state of the wind turbine drive train. This advantageously allows for best reduction of noise transmission and vibrations in different operational states of the wind turbine drive train.

In another preferred embodiment of the invention, a hydraulic elastomer in the elastic gearbox support is used as actuator for adjusting the relative position of bearing unit relative to the support frame. In this very advantageous embodiment, no additional actuator is needed for the installation process of the bearing unit as an actuator which is already installed on the drive train for other purpose during normal operation can be used advantageously as actuator during the installation process.

In a preferred alternative embodiment of the invention, the actuator is detachably connected to the bearing unit and/or to the support frame. Using a connection of the actuator to the bearing unit or the support frame which can be easily demounted, allows for using the actuator as a tool which is only used during the installation process of the wind turbine. Providing the actuator only as a tool for the installation advantageously reduces the costs of the wind turbine drive train.

In another preferred embodiment of the invention, the second fixing means are configured to fix the bearing unit at a rotor side flange of the bearing unit and at a generator side flange of the bearing unit. Using a rotor side flange and/or a generator side flange on the bearing unit as connection interface advantageously allows for a simple, reliable and well proven design for fixing the bearing unit to the support frame. In a preferred embodiment, the bearing unit comprises at its rotor side end a rotor front bearing and at its generator side end a rotor rear bearing. Preferably, the rotor front bearing and the rotor rear bearing are tapered roller bearings, as this bearing type allows to carry high specific loads.

By providing two flanges, one at the rotor side and one at the generator side of the bearing unit, the loads introduced by the rotor front bearing and the rotor rear bearing are transferred to the support frame in a direct way with a short load path. This allows advantageously for a weight reduction of the wind turbine drive train.

In another preferred embodiment of the invention, at least one of the rotor side flange and the generator side flange comprises a vertical connection surface for connecting the bearing unit with the support frame. As explained above, a vertical connection surface advantageously reduces the weight of the wind turbine drivetrain.

In another preferred embodiment of the invention, at least one of the rotor side flange or the generator side flange comprises friction enhancing means. As explained above, friction enhancing means advantageously allows for reduced size and reduced clamping force between the flanges of the bearing unit and the support frame and thus saves costs for the drive train itself, during transportation and installation and during service works.

In another preferred embodiment of the invention, the drive train comprises friction decreasing means between the bearing unit and the support frame. As explained above, friction decreasing means allows advantageously for a smoother and more precise adjustment of the relative position of the bearing unit relative to the support frame. In a preferred embodiment, the friction decreasing means is detachable and can be demounted after the installation of the bearing unit to save investment costs for the wind turbine drivetrain.

In another preferred embodiment of the invention, the drive train comprises at least temporarily guiding means. As explained above, guiding means reduces the risk of damages during the installation process. After the installation of the bearing unit, the guiding means are preferably demounted to save cost and weight.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine as known in the prior art;
Figure 2 -7 show different steps of a method of installing a wind turbine drive train;
Fig. 8 shows an alternative embodiment of a wind turbine drivetrain.

In the diagrams, like numbers refer to like objects throughout. Objects in the diagrams are not necessarily drawn to scale.

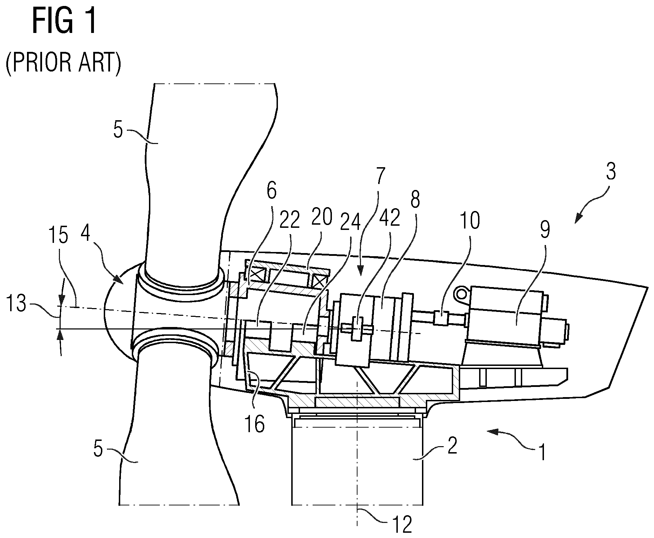

Figure 1 shows a wind turbine 1 with a tower 2 and a nacelle 3 comprising a wind turbine drive train 7 as known in the prior art. Rotatably attached to the nacelle 3 is a wind rotor 4 with a rotor hub and a plurality of rotor blades 5. The torque generated by the wind rotor 4 is transmitted via the rotor shaft 6 to the gearbox 8. The rotor shaft 6 turns around the rotor axis 15 and is supported in the bearing unit 20 with two rotor bearings. In the shown embodiment, the rotor bearings are mounted in the bearing unit 20 which is attached to the support frame 16. In other embodiments, the rotor bearings are mounted in separate pillow blocks that are attached to the support frame 16. The bearing unit 20 is mounted with a rotor side flange 22 and a generator side flange 24 on the support frame 16. The rotor axis 15 is slightly inclined to the horizontal by a tilt angle 13. The tower axis 12 is the longitudinal axis of the tower 2 and is vertical. The output torque of the gearbox 8 is transmitted via the high-speed shaft 10 to the generator 9 to produce electricity. In the shown embodiment, the high-speed shaft 10 is offset relative to the rotor axis 15. In other embodiments, the high-speed shaft 10 is coaxial with the rotor axis 15. The gearbox 8 is supported by two gearbox torque arms 42 at each side of the gearbox 8 on the support frame 16. Thus, the whole drive train 7 is supported by a support frame 16 which is rotatably attached to the tower 2.

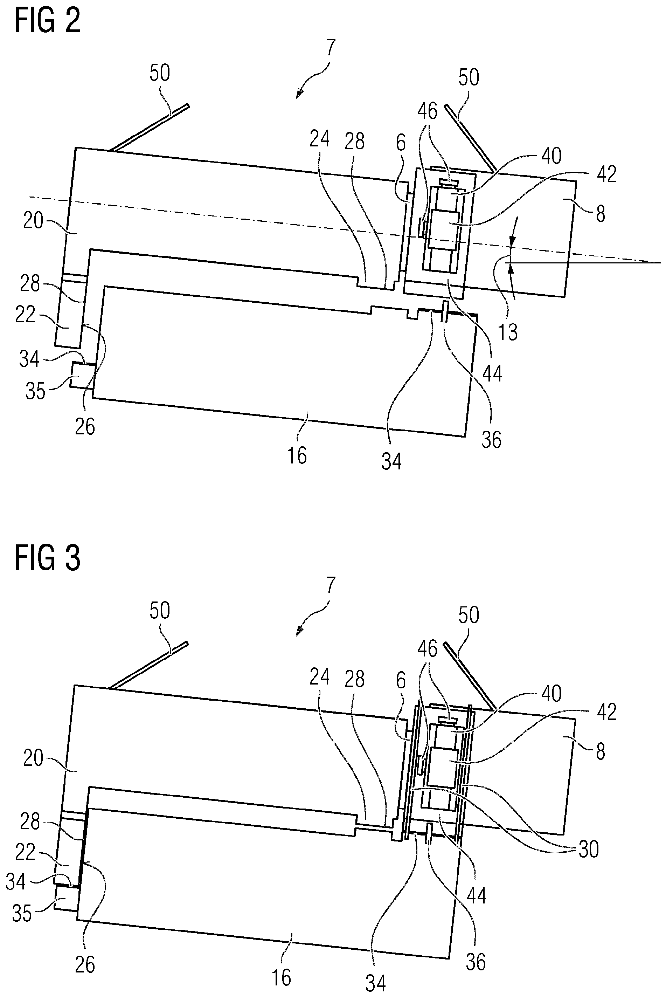

Figure 2 shows a first step of installing the wind turbine drive train 7.

The bearing unit 20 is lifted by lifting means 50 with a predefined tilt angle 13 above the support frame 16. In the shown embodiment, the bearing unit 20 is lifted together with the rotor bearings (not visible) and the rotor shaft 6, the gearbox 8 including the elastic gearbox support 40 as one preassembled unit. The bearing unit 20 comprises a rotor side flange 22 with a vertical connection surface 26 which is covered with friction enhancing means 28. In the shown embodiment, the bearing unit 20 further comprises a generator side flange 24 with a horizontal connection surface which is covered with friction enhancing means 28. In other embodiments, the generator side flange 24 comprises a vertical connection surface and/or the rotor side flange 22 comprises a horizontal connection surface. The friction enhancing means 28 may be realized as surface coating on the contact surfaces of the bearing unit 20 and/or as surface coating on the contact surfaces of the support frame 16. In another embodiment, the friction enhancing means may be an intermediate part placed between the contact surface of the bearing unit 20 and the support frame 16.

Figure 3 shows a next step of the method of installing the wind turbine drive train 7.

The bearing unit 20 is further approached to the support frame and is guided with a guiding means 36, which may be a guide pin or any other means like rails, beams, tensioned cables and the like... In the shown embodiment, the guiding means 36 is mounted on the generator side of the support frame 16 to guide the gearbox mounting frame 44. The bearing unit 20 is set down in an initial position on the support frame 16 on friction enhancing means in form of a slide pad 34 mounted on a front flange support 35 and via the connected rotor shaft 6 and the gearbox mounting frame 44 on friction enhancing means in form of a slide pad 34 mounted on the generator side of the support frame 16. The bearing unit 20 is then connected to the support frame 20 via the elastic gearbox support 40 and attached with the first fixing means 30. In the shown embodiment, the first fixing means 30 are bolts or studs mounted through the gearbox mounting frame 44 and fixed in the support frame 16. The guiding means 34 and the friction increasing means 34 are mounted in a position which provides in this initial position air gaps between the vertical connection face 26 of the rotor side flange 22 and the support frame 20 and between the connection surface of the generator side flange 24 and the support frame 20. By providing these air gaps it is assured that no unwanted impact between the bearing unit 20 and the support frame 20 might damage the connection surfaces of the connection interfaces of the bearing unit 20 and the support frame 20. After the connection between the bearing unit and the support frame 20 is provided with the first connection means 30, the lifting means are released.

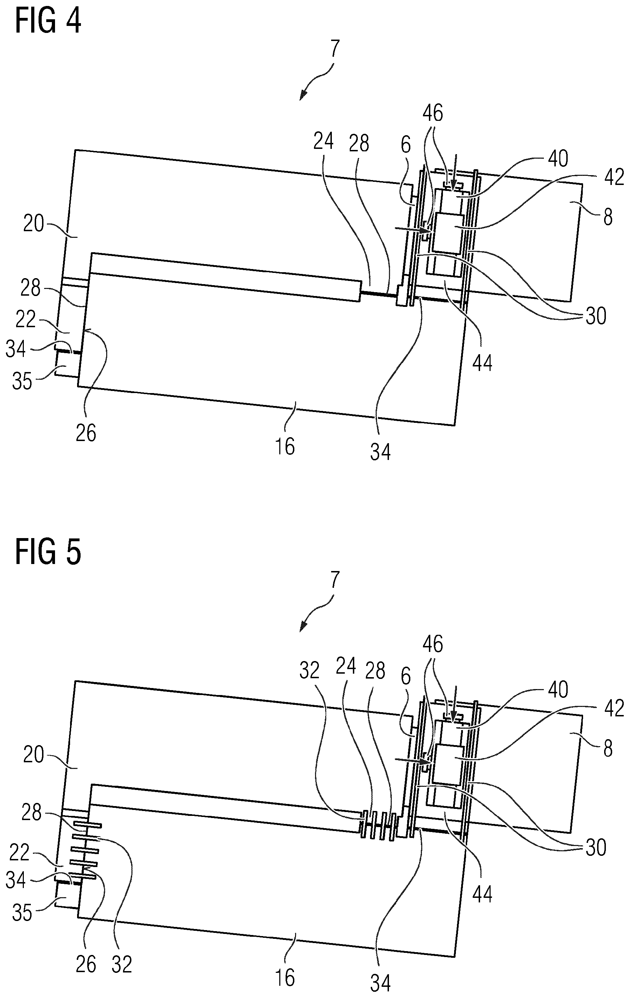

Figure 4 shows a next step of the method of installing the wind turbine drive train 7. The position of the bearing unit 20 relative to the support frame 16 is adjusted by using the actuators 46. In the shown embodiment, the actuators 46 are mounted between the gearbox mounting frame 44 which is connected with the first fixing means 30 to the support frame 16, and the gearbox torque arm 42 which is connected via the gearbox, the rotor shaft and the rotor bearings with the bearing unit 20. Thus, the actuators 46 are connected to the bearing unit 20 and the support frame 16, and due to the elastic gearbox support 40, the position of the first fixing means 30 is adjusted relative to the bearing unit 20 if the actuators 46 are actuated. In the embodiment shown in Fig. 5, two actuators 46 are visible, one acting in the vertical direction, the other one acting in the horizontal direction, as indicated by the arrows. In a preferred embodiment, similar actuators 46 are installed on both sides of the gearbox 8. Preferably, in a first step, the bearing unit 20 is pushed backward in the direction of the generator side with the actuator 46 acting in the horizontal direction until the air gap at the vertical connection surface 26 is mainly closed. In a second step the actuator 46 acting in the vertical direction is used to move the bearing unit downwards until the air gap at the connection surface of the generator side flange 24 is closed.

Figure 5 shows a next step of the method of installing the wind turbine drive train 7. When the bearing unit 20 has reached its final operating position relative to the support frame 16, the bearing unit 20 is rigidly fixed to the support frame 16 with the second fixing means 32. On the rotor side flange 22, the second fixing means is a plurality of bolts or studs arranged through the vertical connection surface 26, the bolts or studs being oriented in an axial direction, which means parallel to the rotor axis 15. On the generator side flange 24, the second fixing means comprises is a plurality of bolts or studs arranged through the generator side flange 24, the bolts or studs being oriented mainly in a vertical direction, which means mainly parallel to the longitudinal axis of the tower 2.

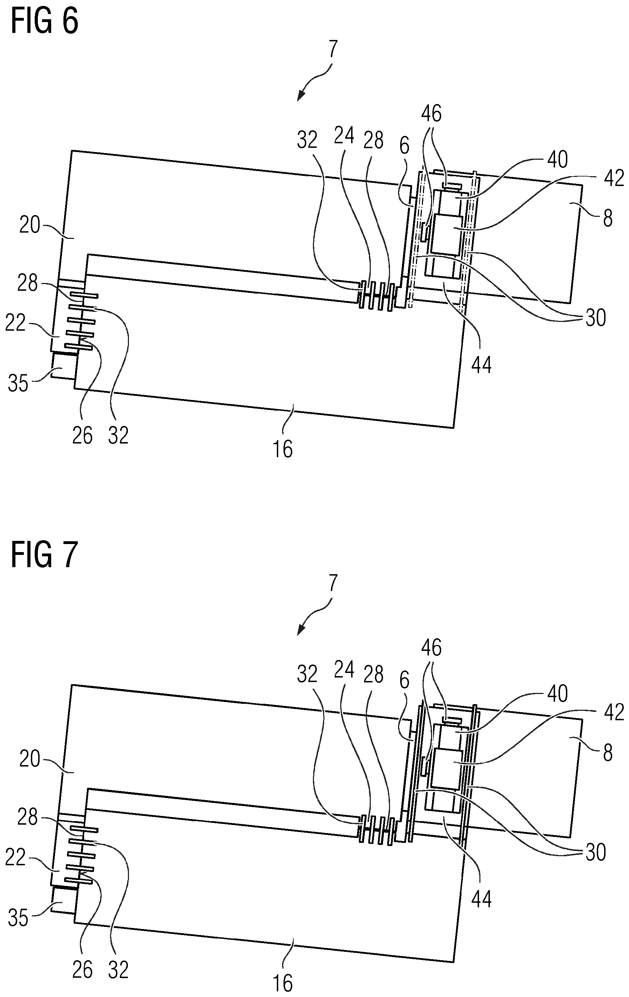

Figure 6 shows a next step of the method of installing the wind turbine drive train 7. The friction decreasing means 34 are removed from the drive train 7. On the rotor side flange 22 this is preferably done by removing or loosening the front flange support 35. On the side of the gearbox mounting frame 44 this is preferably done by removing or loosening the first fixing means 30. As the bearing unit 20 has been pushed down with the actuator 46 before as shown in Fig. 5, the gearbox mounting frame 44 will be pushed up by the elastic gearbox support 40 if the first fixing means 30 are released, so opening an air gap at the friction decreasing means 34 for easy removal. In the case that there is no sufficient air gap for removing the friction decreasing means 34 after releasing the first fixing means 30, alternatively or additionally the gearbox mounting frame 44 may be lifted a bit by using the existing actuator 46 or by an additional actuator or lifting means 50.

Figure 7 shows the last step of the method of installing the wind turbine drive train 7. After removal of the friction decreasing means 34, the first fixing means 30 are remounted again for fixing the gearbox mounting frame 44 to the support frame 16.

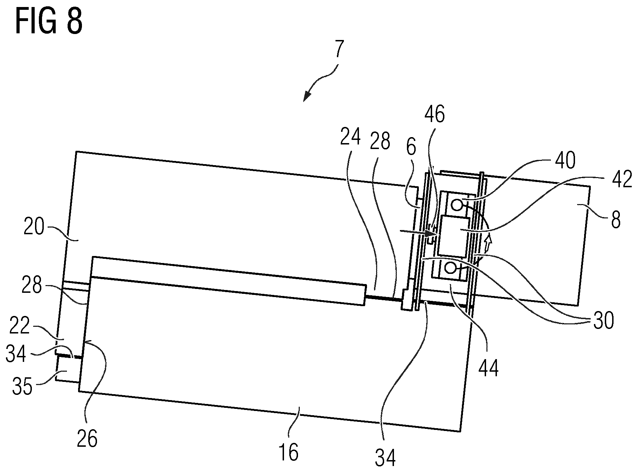

Figure 8 shows an alternative embodiment of the wind turbine drive train 7. In this embodiment, the elastic gearbox support 40 includes a hydraulic elastomer, which replaces the vertical actuator 46. As a hydraulic elastomer allows to move a hydraulic volume form the lower elastomer to the higher elastomer as indicated by the arrow, a vertical displacement of the gearbox torque arm 42 in the downward direction can be created. It can be easily understood that moving the hydraulic volume from the higher to the lower elastomer creates an upward movement of the gearbox torque arm 42. During normal operation of the wind turbine drive train 7 in power production mode, the hydraulic elastomer may be used to adjust the stiffness of the elastic gearbox support 40 for reduction of vibrations or noise transmission.

### Reference list

- 1: Wind Turbine
- 2: Tower
- 3: Nacelle
- 4: Wind Rotor
- 5: Rotor Blade
- 6: Rotor Shaft
- 7: Drive Train
- 8: Gearbox
- 9: Generator
- 10: High-Speed Shaft
- 12: Tower Axis
- 13: Tilt Angle
- 15: Rotor Axis
- 16: Support Frame
- 20: Bearing Unit
- 22: Rotor Side Flange
- 24: Generator Side Flange
- 26: Vertical connection surface
- 28: Friction Enhancing Means

- 30: First Fixing Means
- 32: Second Fixing Means
- 34: Friction Decreasing Means
- 35: Front Flange Support
- 36: Guiding Means

- 40: Elastic Gearbox Support
- 42: Gearbox Torque Arm
- 44: Gearbox Mounting Frame
- 46: Actuator

- 50: Lifting Means

## Claims

1. A method for installing a wind turbine drive train (7) for transmitting torque from a wind rotor (4) to a generator (9), said wind turbine drive train (7) comprising a support frame (16), a bearing unit (20), first fixing means (30) and second fixing means (32), the method comprising the steps of
- connecting the bearing unit (20) to the support frame (16) in an initial position by attaching the bearing unit (20) with the first fixing means (30) to the support frame (16),
- adjusting the position of the bearing unit (20) relative to the support frame (16) by adjusting the position of the first fixing means (30), and
- fixing the bearing unit (20) rigidly to the support frame (16) with the second fixing means (32).

2. The method for installing the wind turbine drive train (7) according to the previous claim, wherein the step of fixing the bearing unit (20) rigidly to the support frame (16) comprises at least one of the steps of
- fixing the bearing unit (20) rigidly to the support frame (16) at a rotor side flange (22) of the bearing unit (20), or
- fixing the bearing unit (20) rigidly to the support frame (16) at a generator side flange (24) of the bearing unit (20).

3. The method for installing the wind turbine drive train (7) according to the previous claim, wherein the method comprises at least one of the additional steps
- providing friction enhancing means (28) between the rotor side flange (22), in particular a vertical connection surface (26) of the rotor side flange (22) of the bearing unit and the support frame (16), before fixing the bearing unit (20) rigidly to the support frame (16), or
- providing friction enhancing means (28) between the generator side flange (24), in particular a vertical connection surface (26) of the generator side flange (24) of the bearing unit and the support frame (16), before fixing the bearing unit (20) rigidly to the support frame (16).

4. The method for installing the wind turbine drive train (7) according to any of the previous claims, wherein the method further comprises the step of
- providing friction decreasing means (34) between the bearing unit (20) and the support frame (16) before adjusting the position of the first fixing means (30).

5. The method for installing the wind turbine drive train (7) according to the previous claim, wherein the method comprises the additional step of
- demounting the friction decreasing means (34) after adjusting the position of the first fixing means (30).

6. The method for installing the wind turbine drive train (7) according to any of the previous claims, wherein the method comprises the additional step of
- providing guiding means (36) before connecting the bearing unit (20) to the support frame (16) in the initial position.

7. The method for installing the wind turbine drive train (7) according to any of the previous claims, wherein the method comprises the additional step of
- providing an actuator (46) before adjusting the position of the first fixing means (30).

8. The method for installing the wind turbine drive train (7) according to any of the previous claims, wherein the step of adjusting the position of the bearing unit (20) relative to the support frame (16) comprises using an elastic gearbox support (40) for adjusting the position of the bearing unit (20) relative to the support frame (16).

9. A wind turbine drive train (7) for transmitting torque from a wind rotor (4) to a generator (9) comprising a support frame (16), a bearing unit (20), first fixing means (30), second fixing means (32) and an actuator (46),
wherein the first fixing means (30) is adapted to fix the bearing unit (20) to the support frame(16) in an initial position,
wherein the actuator (46) is adapted to adjust the position of the first fixing means (30) to adapt the position of the bearing unit (20) relative to the support frame (16),
wherein the second fixing means (32) are adapted to fix the bearing unit (20) rigidly to the support frame (16).

10. The wind turbine drive train (7) according to the preceding claim, wherein the actuator (46) is detachably connected to the bearing unit (20) and/or to the support frame (16).

11. The wind turbine drive train (7) according to claim 9 or 10, wherein the second fixing means (32) are configured to fix the bearing unit (20) at a rotor side flange (22) of the bearing unit (20) and at a generator side flange (24) of the bearing unit (20).

12. The wind turbine drive train (7) according to the preceding claim, wherein at least one of the rotor side flange (22) and the generator side flange (24) comprises a vertical connection surface (26) for connecting the bearing unit (20) with the support frame (16).

13. The wind turbine drive train (7) according to claim 11 to 12, wherein at least one of the rotor side flange (22) or the generator side flange (24) comprises friction enhancing means (28).

14. The wind turbine drive train (7) according to claim 9 to 13, wherein the drive train (7) comprises friction decreasing means (34) between the bearing unit (20) and the support frame (16) or wherein the drive train (7) comprises at least temporarily guiding means (36).

15. A wind turbine nacelle (3) comprising a wind turbine drive train (7) according to any of the claims 9 to 14.
